# FASCICULE DE BREVET EUROPEEN

(11) **EP 1 882 173 B1**
(45) Date de publication et mention de la délivrance du brevet: **26.05.2010**
(21) Numéro de dépôt: 06764569.7
(22) Date de dépôt: 28.04.2006
(51) Int. Cl.: G01N 15/08, G01N 21/21

(54) **PROCEDE DE MESURE DE LA POROSITE PAR ELLIPSOMETRIE ET DISPOSITIF METTANT EN OEUVRE UN TEL PROCEDE**
VERFAHREN ZUR POROSITÄTSMESSUNG MITTELS ELLIPSOMETRIE UND VORRICHTUNG ZUR IMPLEMENTIERUNG EINES SOLCHEN VERFAHRENS
METHOD OF MEASURING POROSITY BY MEANS OF ELLIPSOMETRY AND DEVICE FOR IMPLEMENTING SUCH METHOD

(30) Priorité: 18.05.2005 FR 0504987
(43) Date de publication de la demande: 30.01.2008
(73) Titulaire: COMMISSARIAT A L'ENERGIE ATOMIQUE, 75015 Paris (FR)
(72) Inventeur: SIMON, Gurvan, F-38000 Grenoble (FR); FERRIEU, Frédéric, F-38700 Corenc (FR)
(74) Mandataire: Hecké, Gérard
(86) Numéro de dépôt international: PCT/FR2006/000960
(87) Numéro de publication internationale: WO 2006/123030

(56) Documents cités:
- WO-A-03/029789
- US-A1- 2001 054 306
- US-A1- 2002 110 921
- US-B1- 6 831 742
- BAKLANOV M R ET AL: "Determination of pore size distribution in thin films by ellipsometric porosimetry" JOURNAL OF VACUUM SCIENCE & TECHNOLOGY B: MICROELECTRONICS PROCESSING AND PHENOMENA, AMERICAN VACUUM SOCIETY, NEW YORK, NY, US, vol. 18, no. 3, mai 2000 (2000-05), pages 1385-1391, XP012008204 ISSN: 0734-211X

## Description

### Domaine technique de l'invention

L'invention concerne un procédé de mesure de la porosité d'un élément au moyen d'un dispositif comportant :
- une enceinte de mesure, dans laquelle l'élément est disposé,
- un réservoir de solvant associé à une vanne d'adsorption, disposée entre le réservoir de solvant et une entrée de l'enceinte,
- une pompe associée à une vanne de désorption, disposée entre une sortie de l'enceinte et la pompe,
- un capteur de pression,
- et des moyens de contrôle des vannes d'adsorption et de désorption,
le procédé de mesure comportant la mesure de la pression dans l'enceinte, au moyen du capteur de pression, et un cycle de mesure de la porosité par ellipsométrie, à diverses valeurs prédéterminées de la pression, procédé caractérisé en ce que, pendant le cycle de mesure de la porosité par ellipsométrie, lesdits moyens de contrôle commandent l'ouverture des vannes d'adsorption et de désorption, en fonction de la pression mesurée, la pression relative dans l'enceinte étant régulée successivement à diverses valeurs prédéterminées, tout en maintenant un flux continu de solvant dans l'enceinte, entre le réservoir et la pompe.

L'invention concerne également un dispositif mettant en oeuvre un tel procédé.

### État de la technique

L'étude des matériaux poreux à faible permittivité, appelés matériaux "low-k", présente des intérêts dans de nombreux domaines, notamment en micro et nanotechnologies. La mesure des différentes caractéristiques de la porosité de ces matériaux peut être réalisée, par exemple, par porosimétrie ellipsométrique.

La porosimétrie ellipsométrique permet de mesurer l'épaisseur et l'indice de la couche poreuse dans un environnement de vapeurs de solvant. La variation d'indice de réfraction de la couche poreuse en fonction de la pression relative de la vapeur de solvant permet de déterminer le volume de solvant introduit dans les pores ouverts et d'établir une courbe isotherme. À partir de ce relevé, il est possible de déterminer différentes caractéristiques importantes de la porosité, et donc de contrôler les propriétés électriques et mécaniques du matériau poreux.

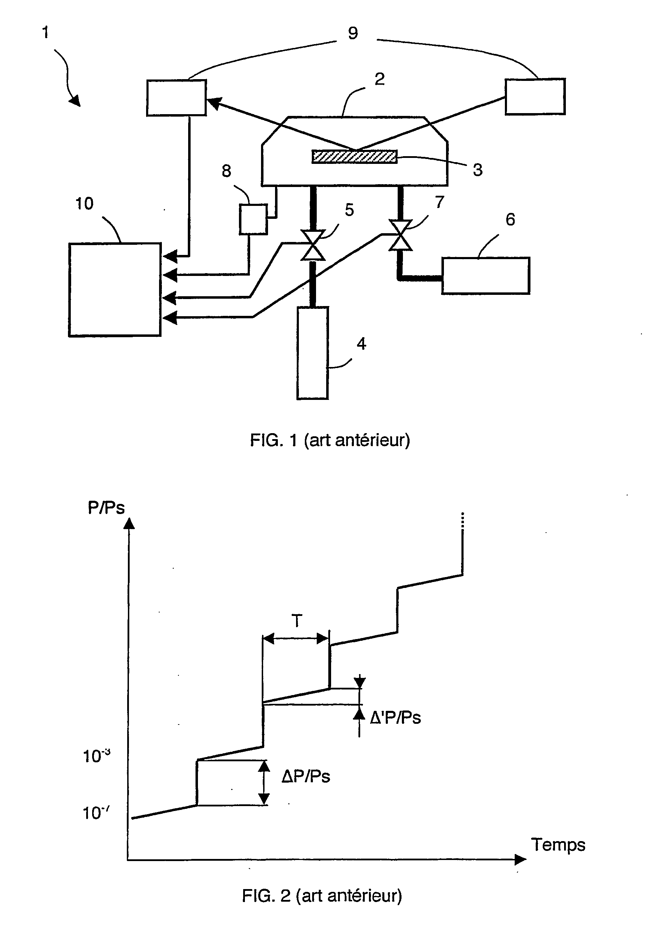

Pour mettre en oeuvre un tel procédé de mesure par porosimétrie ellipsométrique, de nombreux laboratoires ont développé des équipements spécifiques. Les documents US 6319736 et US 6435008 décrivent un exemple de dispositif de mesure mettant en oeuvre un tel procédé. Comme représenté sur la figure 1, le dispositif de mesure 1 comporte une enceinte de mesure 2, à l'intérieur de laquelle est disposé un élément 3, constitué de matériaux poreux.

Le dispositif 1 comporte un réservoir de solvant 4, associé à une vanne d'adsorption 5, destinée à introduire du solvant dans l'enceinte 2, et une pompe 6 associée à une vanne de désorption 7, destinée à pomper les vapeurs de solvant. Un capteur de pression 8 est relié à l'enceinte 2, afin de mesurer la pression à l'intérieur de l'enceinte 2. La mesure de la porosité s'effectue au moyen d'un ellipsomètre 9, qui peut être relié à un système d'enregistrement de données 10. Le capteur de pression 8 et les vannes d'adsorption 5 et de désorption 7 peuvent également être reliés au système d'enregistrement de données 10, afin de récupérer des données exploitables.

Un tel dispositif de mesure 1 gère et contrôle la pression en "statique", pendant toute la durée d'un cycle de mesure de la porosité par ellipsométrie, c'est-à-dire que les variations de pression dans l'enceinte 2 sont gérées, soit par l'introduction de solvant dans l'enceinte 2, soit par le pompage du solvant.

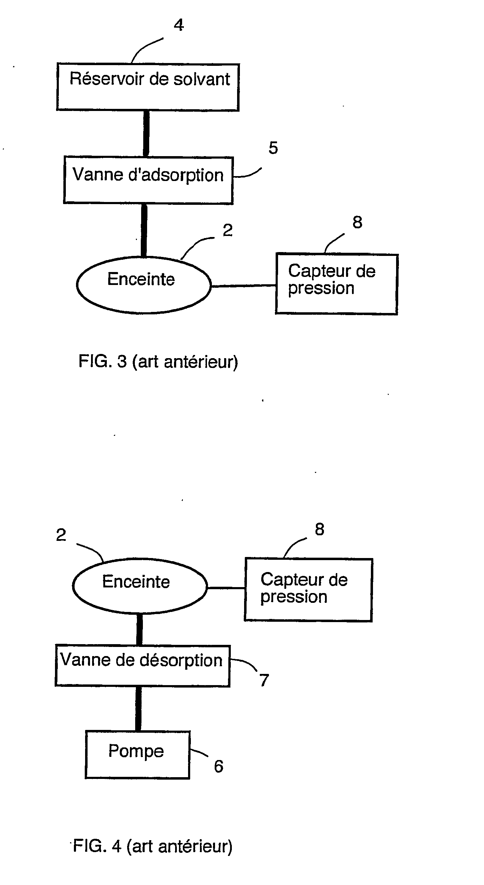

En se référant aux figures 3 et 4, illustrant respectivement une phase d'adsorption de solvant et une phase de désorption du solvant, la montée en pression, ou phase d'adsorption (figure 3), se produit uniquement par l'introduction de vapeur de solvant dans l'enceinte 2, à travers la vanne d'adsorption contrôlée 5, et la descente en pression, ou phase de désorption (figure 4), se produit uniquement par le pompage du solvant présent dans l'enceinte 2, à travers la vanne de désorption contrôlée 7, au moyen de la pompe 6.

Comme représenté sur la figure 2, illustrant la phase d'adsorption d'un cycle de mesure de la porosité par ellipsométrie, le dispositif de mesure 1 contrôle la vanne d'adsorption 5 afin d'obtenir une pluralité de paliers de pression successifs, au niveau desquels sont effectuées les mesures. Une variation de pression Δ'P/Ps, où Ps est la pression de vapeur saturante de solvant, est observée au niveau d'un palier pendant toute la durée T d'une mesure. Cette variation de pression provient, d'une part, de l'introduction en continu de solvant pendant les mesures par ellipsométrie et, d'autre part, de fuites de certaines parties du dispositif de mesure sous vide. Les résultats des mesures sont alors obtenus en négligeant cette variation de pression entre le début et la fin de la mesure.

Cependant, cette variation de pression Δ'P/Ps pose des problèmes, notamment d'imprécisions de mesures et d'exploitation des résultats, et limite l'écart entre les paliers de pression. Par ailleurs, les courbes isothermes obtenues ne sont pas totalement fiables et un tel dispositif de mesure ne permet pas de maîtriser la gamme des basses pressions, pour l'étude de la microporosité.

Le contrôle de la pression par les vannes d'adsorption 5 et de désorption 7, peut également être à l'origine de variations de température. Les variations de température peuvent être dues aussi à des conditions externes telles que la température de la pièce dans laquelle est situé le dispositif de mesure de porosimétrie ellipsométrique ou à des phénomènes internes tels que la condensation capillaire du solvant sur les parois des pores ouverts du matériau.

Par ailleurs, le phénomène même de physisorption peut générer des variations de température. Or, une variation de température, même faible, fausse les courbes isothermes obtenues par les mesures ellipsométriques, qui ne peuvent alors plus être étudiées en détail.

Par ailleurs, la pollution de l'élément 3 à l'intérieur de l'enceinte 2, par des résidus carbonés d'origine incertaine, est couramment observée dans toutes les manipulations du même type.

### Objet de l'invention

L'invention a pour but de remédier aux inconvénients précités et a pour objet la réalisation d'un procédé de mesure de la porosité par ellipsométrie, améliorant les procédés de mesure existants en apportant une précision optimale aux mesures et une exploitation fiable des résultats obtenus.

L'invention a également pour objet la réalisation d'un dispositif pour la mise en oeuvre d'un tel procédé de mesure de la porosité par ellipsométrie.

Ces objets de l'invention sont atteints par les revendications annexées. Le procédé selon l'invention est plus particulièrement caractérisé par le fait que, pendant le cycle de mesure de la porosité par ellipsométrie, lesdits moyens de contrôle commandent l'ouverture des vannes d'adsorption et de désorption, en fonction de la pression mesurée, la pression relative dans l'enceinte étant régulée successivement à diverses valeurs prédéterminées, tout en maintenant un flux continu de solvant dans l'enceinte, entre le réservoir et la pompe.

Le dispositif selon l'invention est plus particulièrement caractérisé par le fait que les vannes d'adsorption et de désorption sont contrôlées en pression ou en position, par l'intermédiaire des moyens de contrôle de l'ouverture des vannes.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un dispositif de mesure de la porosité par ellipsométrie, selon l'art antérieur.
La figure 2 est un graphique de la pression en fonction du temps, illustrant les différents paliers de pression prédéterminés de la phase d'adsorption, selon l'art antérieur, au niveau desquels sont effectuées les mesures.
Les figures 3 et 4 représentent, sous forme de schéma-bloc, le dispositif selon la figure 1, respectivement, en phase d'adsorption et en phase de désorption.
La figure 5 représente, sous forme de schéma-bloc, un mode particulier de réalisation d'un dispositif de mesure de la porosité par ellipsométrie selon l'invention.
La figure 6 représente, sous forme de schéma-bloc, une variante de réalisation d'un dispositif de mesure de la porosité par ellipsométrie selon la figure 5.
La figure 7 est un graphique de la pression en fonction du temps, illustrant les différents paliers de pression prédéterminés de la phase d'adsorption, selon l'invention, au niveau desquels sont effectuées les mesures.
La figure 8 représente, sous forme de schéma-bloc, une autre variante de réalisation d'un dispositif de mesure de la porosité par ellipsométrie, selon la figure 5.

### Description de modes particuliers de réalisation

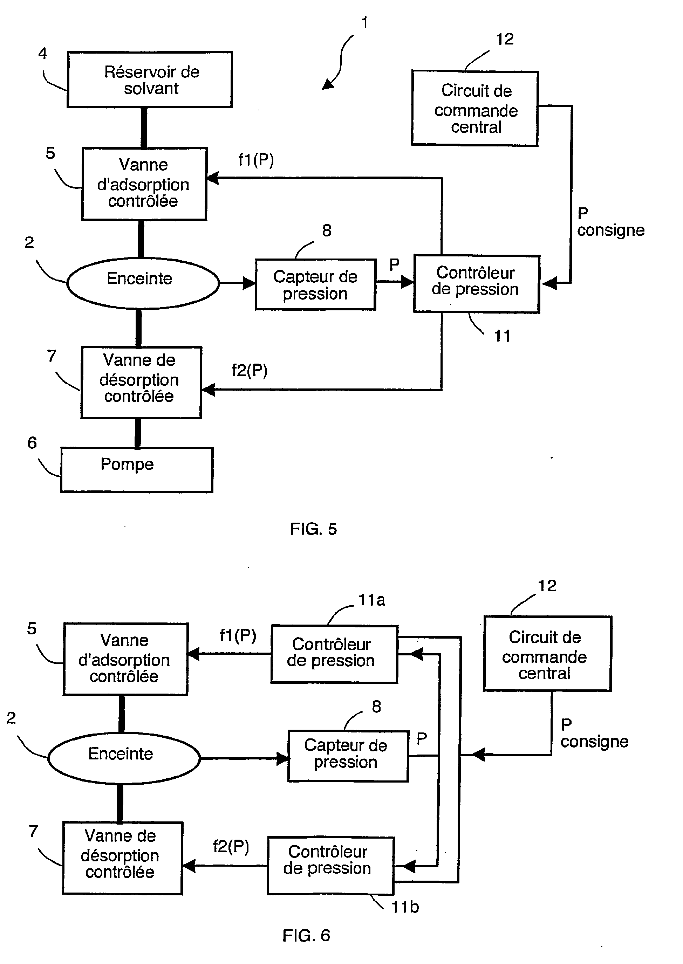

Sur la figure 5, le dispositif de mesure 1 de la porosité par ellipsométrie, d'un élément 3 dans l'enceinte 2, comporte le réservoir de solvant 4, associé à la vanne d'adsorption 5, et la pompe 6, associée à la vanne de désorption 7. Les vannes d'adsorption 5 et de désorption 7 sont commandées par un contrôleur de pression 11, relié au capteur de pression 8 mesurant la pression à l'intérieur de l'enceinte 2.

En fonction de la valeur de pression P mesurée par le capteur 8, le contrôleur de pression 11 commande l'ouverture et la fermeture de la vanne d'adsorption 5, selon la fonction f1 (P), et l'ouverture et la fermeture de la vanne de désorption 7, selon la fonction f2(P). Le contrôleur de pression 11 est destiné à maintenir un flux continu de solvant dans l'enceinte 2, entre le réservoir de solvant 4 et le pompe 6. La pression dans l'enceinte 2 est stabilisée quand la quantité entrante de solvant est égale à la quantité sortante de solvant. La régulation de la pression s'effectue selon les commandes f1(P) et f2(P), de manière à former différents paliers de pression successifs, pendant le cycle de mesure de la porosité par ellipsométrie.

Avant de débuter le cycle de mesure, le dispositif 1 peut, de préférence, mettre en oeuvre une étape de pompage de l'enceinte 2, au moyen de la pompe 6, jusqu'à atteindre un vide relatif, servant de pression de départ pour les mesures.

Dans la variante de réalisation représentée sur la figure 6, il est possible de prévoir deux contrôleurs de pression 11 a, 11 b, respectivement reliés à la vanne d'adsorption 5 et à la vanne de désorption 7. En fonction de la valeur de pression P mesurée par le capteur 8, le contrôleur de pression 11 a commande l'ouverture et la fermeture de la vanne d'adsorption 5 selon la fonction f1 (P) et le contrôleur de pression 11 b commande l'ouverture et la fermeture de la vanne de désorption 7 selon la fonction f2(P).

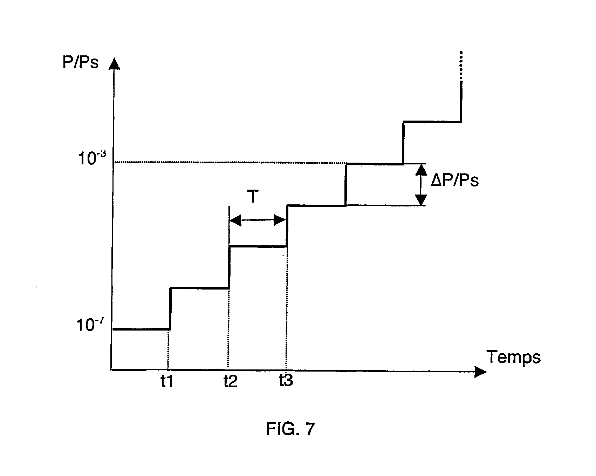

La figure 7 représente les variations relatives de pression P/Ps en fonction du temps, où Ps est la pression de vapeur saturante de solvant. Elle peut être déterminée, par exemple, par l'une des méthodes suivantes : mesure de la pression en fin de cycle, ou mesure de la température de la pièce et détermination de la pression Ps en fonction de la température de solvant à partir de tables de données connues, ou mise sous vide du réservoir rempli de solvant liquide et fermeture du réservoir en attendant l'établissement de l'équilibre thermodynamique entre les phases liquide et gazeuse.

La pression de départ est, par exemple, de l'ordre de 10⁻⁵ Torr. Comme représenté sur la figure 7, en référence au mode particulier de réalisation de la figure 5, des premières mesures sont effectuées pendant une durée T, jusqu'à un instant t1. La pression reste constante pendant toute la durée T des mesures, grâce au contrôleur de pression 11. Le contrôleur de pression 11 commande ensuite les vannes d'adsorption 5 et de désorption 7, en conservant le flux continu de solvant, pour atteindre un palier de pression P/Ps de valeur supérieure, correspondant à une autre valeur de pression prédéterminée, à laquelle les mesures sont effectuées, entre les instants t1 et t2.

Le procédé de mesure s'effectue ainsi de suite, par commande des vannes d'adsorption 5 et de désorption 7 et régulation de la pression selon une succession de paliers de pression de valeurs croissantes. À chaque palier de pression P/Ps, le temps T de mesure est, de préférence, identique et relativement court et la pression reste constante.

Après la succession de paliers de pression P/Ps de valeurs croissantes, le contrôleur de pression 11 peut commander les vannes d'adsorption 5 et de désorption 7, afin de réguler la pression selon une succession de paliers de pression de valeurs décroissantes (non représentés sur la figure 6 pour des raisons de clarté), correspondant à la phase de désorption. Le flux continu de solvant entre le réservoir de solvant 4 et la pompe 6 est maintenu et les mesures par ellipsométrie sont effectuées pendant la même durée T, à pression constante et au niveau de chaque palier de pression. Les valeurs de pression prédéterminées des paliers de valeurs décroissantes sont identiques à celles des paliers de valeurs croissantes, lorsque les courbes d'adsorption et de désorption présentent la même forme.

Lorsque les courbes d'adsorption et de désorption ne présentent pas la même forme, les paliers sont sélectionnés en fonction des zones particulières de chaque courbe. À titre d'exemple, un nombre important de paliers est choisi au niveau des parties de la courbe présentant une forte pente.

Le dispositif de mesure 1, avec le contrôleur de pression 11 commandant les vannes d'adsorption 5 et de désorption 7, permet donc un contrôle fin des paliers de pression croissants et décroissants et la construction de courbes isothermes précises et détaillées. À titre d'exemple, il est possible d'obtenir cinq paliers de pression successifs pour des valeurs de P/Ps comprises entre 10⁻⁷ et 10⁻³, pour effectuer les mesures par ellipsométrie. Les résultats obtenus prennent en compte beaucoup de points de mesure et sont très précis, car la pression reste constante pendant le temps T des mesures. Les courbes isothermes obtenues sont alors plus fiables et exploitables en détail.

Dans le mode particulier de réalisation représenté sur la figure 5, le contrôleur de pression 11 est lui-même commandé, par exemple, par un circuit de commande central 12, pouvant fournir une valeur de pression spécifique, P consigne. Les commandes f1 (P) et f2(P), respectivement, des vannes d'adsorption 5 et de désorption 7 dépendent alors de la valeur de la pression P consigne fournie et de la valeur de la pression P mesurée par le capteur de pression 8.

Dans le mode particulier de réalisation représenté sur la figure 6, les contrôleurs de pression 11 a et 11 b peuvent également être contrôlés par un circuit de commande central 12, pouvant fournir une valeur de pression spécifique P consigne, ou peuvent être pilotés individuellement par un circuit de commande correspondant (non représenté).

À titre d'exemple, la vanne d'adsorption 5 est contrôlée en position et la vanne de désorption 7 est contrôlée en pression, pour obtenir le flux continu de solvant, entre le réservoir 4 et la pompe 6. L'introduction de solvant par la vanne d'adsorption 5 s'effectue au moyen d'une micro-fuite, de préférence au moyen d'une pluralité de micro-fuites, par exemple de tailles différentes. Le contrôle en position s'effectue au moyen d'un élément de fermeture mobile, commandé par le contrôleur de pression 11 ou par le circuit de commande central 12, afin qu'il obture plus ou moins les micro-fuites. Le contrôle en pression de la vanne de désorption 7 est réalisé au moyen d'une ouverture plus ou moins grande de son orifice de désorption.

À titre d'exemple, la vanne de désorption 7 oeuvre dans les phases de stabilisation de la pression et la vanne d'adsorption 5 dans les phases de variation de la pression. À une première valeur P1 de pression, la vanne de désorption 7 est asservie par le contrôleur de pression 11 et la vanne d'adsorption 5 est bloquée à une ouverture établie précédemment. L'introduction de solvant est constante et le pompage est adapté par la vanne de désorption 7. La pression est alors stabilisée à la première valeur P1. Pour accéder à une seconde valeur P2 de pression, la vanne de désorption 7 est fixée et la position de la vanne d'adsorption 5 varie. Une fois la seconde valeur P2 de pression approchée, la vanne d'adsorption 5 est fixée et le contrôleur de pression 11 contrôle la vanne de désorption 7 en fonction de la seconde valeur P2 comme consigne. La pression est alors stabilisée à la seconde valeur P2.

À titre d'exemple, le principe est le même que précédemment, mais la variation de la position de la vanne d'adsorption 5 n'est pas nécessaire à chaque changement de palier en pression. La gamme complète de pressions de la physisorption, de l'ordre de 10⁻⁵ Torr à 50 Torr, est scindée en plusieurs sous-gammes, par exemple trois ou quatre, correspondant chacune à une position de la vanne d'adsorption 5, les sous-gammes étant choisies de manière à rester dans la gamme de fonctionnement optimal de la vanne de désorption 7.

Dans une variante de réalisation, au moins une des vannes comporte un injecteur, lesdits moyens de contrôle de l'ouverture de ladite vanne comportant des moyens de contrôle de la quantité de solvant circulant dans ledit injecteur. Par exemple, l'introduction de solvant par la vanne d'adsorption 5 peut s'effectuer au moyen d'un injecteur. Le contrôleur de pression 11 comprend alors des moyens de contrôle de la quantité de solvant introduit dans l'enceinte 2, afin de calculer la quantité exacte de solvant introduite dans l'enceinte 2. Le contrôle en pression de la vanne de désorption 7 peut également être réalisé par un injecteur, celui-ci permettant de contrôler et quantifier la quantité exacte de solvant sortant de l'enceinte 2 à travers la vanne de désorption 7.

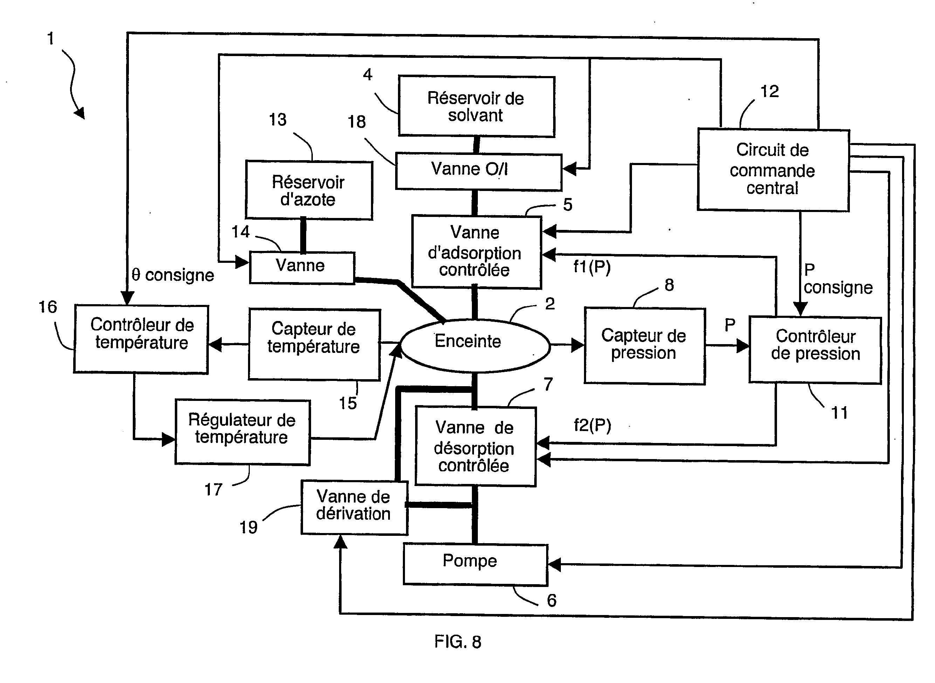

Sur la figure 8, la variante de réalisation du dispositif de mesure 1 se distingue du mode de réalisation précédent par la présence d'éléments supplémentaires optimisant la mise en oeuvre du procédé de mesure. Le dispositif de mesure 1 comporte un réservoir d'azote 13 associé à une vanne d'introduction 14, reliée à une entrée de l'enceinte 2.

Le réservoir d'azote 13 permet au dispositif 1 d'effectuer une étape de purge à l'azote de l'enceinte 2, avant l'étape de pompage à vide initiant un cycle de mesure de la porosité par ellipsométrie. Cette étape de purge à l'azote permet notamment l'évacuation de molécules polluantes éventuellement présentes dans l'enceinte 2, pour optimiser les mesures effectuées par la suite.

Il est possible de prévoir avantageusement une étape de purge à l'azote également à la fin du cycle de mesure, avant de remettre l'enceinte 2 à la pression atmosphérique avant son ouverture pour le changement d'élément 3, afin de protéger le dispositif de mesure 1 des pollutions, lors de l'ouverture de l'enceinte 2.

Dans le mode particulier de réalisation de la figure 8, le dispositif de mesure 1 peut comporter un capteur de température 15, relié à un contrôleur de température 16, pouvant gérer et modifier cette température, au moyen d'un régulateur de température 17. Le capteur 15, le contrôleur 16 et le régulateur 17 constituent un ensemble de gestion de la température, optimisant la précision et l'exploitation des courbes isothermes obtenues après mesures. En effet, le fait de maintenir la température constante, permet d'assurer un caractère isotherme à chaque manipulation et d'établir des courbes isothermes exploitables à différentes températures et sur toute la gamme de pression.

Le contrôleur de température 16 peut recevoir éventuellement une température de consigne, θ consigne, fournit, par exemple, par le circuit de commande central 12 et correspondant à une valeur de température prédéterminée, pour laquelle les mesures ellipsométriques doivent être effectuées.

La température est, de préférence, mesurée sur l'élément 3 à l'intérieur de l'enceinte 2, au moyen d'un capteur de température, par exemple un thermocouple ou une thermorésistance, et régulée par un régulateur de température, par exemple de type Peltier.

Dans une variante de réalisation, c'est la température à l'intérieur de l'enceinte 2 qui est mesurée et régulée. Dans ce cas, il faut prévoir ce contrôle lors de la conception de l'enceinte 2, par exemple en insérant des capteurs à l'intérieur de l'enceinte 2 et avantageusement au plus près de l'élément 3, par exemple au niveau d'un porte-élément ou plus généralement au niveau des moyens de fixation de l'élément 3 dans l'enceinte 2.

Dans une autre variante de réalisation, il est possible de mesurer et réguler la température au niveau du réservoir de solvant 4. La température du solvant est alors modifiée avant son introduction dans l'enceinte 2, par exemple par l'intermédiaire de résistances chauffantes, insérées dans le réservoir de solvant 4, ou d'un serpentin comportant un fluide à température contrôlée, situé autour du réservoir 4.

Dans le mode particulier de réalisation du dispositif de mesure 1, représenté sur la figure 8, le dispositif de mesure 1 peut comporter également une vanne tout ou rien 18, disposée entre le réservoir de solvant 4 et la vanne d'adsorption 5 correspondante. La vanne 18 est destinée à commander l'ouverture complète ou la fermeture complète du réservoir de solvant 4, afin de bloquer ou non le flux de solvant provenant du réservoir 4. Cette vanne tout ou rien 18 est notamment utilisée lors des phases de transition, telles que le pompage initial, la purge à l'azote, la remise à la pression atmosphérique, et lors de l'introduction d'un nouvel élément 3 à l'intérieur de l'enceinte 2, qui ne doit contenir aucune trace de solvant lors du transfert des éléments 3.

Le dispositif de mesure 1 peut également comporter une vanne de dérivation 19, disposée entre la sortie de l'enceinte 2 et la pompe 6, permettant un pompage direct des vapeurs de solvant, sans passer par la vanne de désorption contrôlée 7. Soit les vapeurs de solvant sont aspirées par la vanne contrôlée 7, notamment pour réguler la pression et assurer le flux continu de solvant, soit les vapeurs de solvant sont aspirées par la vanne de dérivation 19, pour évacuer une grande quantité de solvant très rapidement et sans contrôle. La vanne de dérivation 19 est notamment utilisée pour vider l'enceinte 2, avant d'effectuer une purge à l'azote, ou lors du pompage initial pour assurer une descente rapide au vide relatif et éviter en particulier les pollutions carbonées.

Dans une autre variante de réalisation non représentée, il est possible de prévoir une automatisation complète du dispositif de mesure 1. Le circuit de commande central 12 peut, par exemple, être relié à un ordinateur ou à un calculateur approprié, qui commande au moyen d'asservissements, par exemple, de type Proportionnel Intégrale Dérivée (PID), le contrôle de la température et de la pression. Suivant les valeurs prédéterminées de la pression et de la température, l'ordinateur recalcule les paramètres et stabilise le système en pression et en température, au moyen du contrôleur de pression 11 et du contrôleur de température 16. Les mesures ellipsométriques peuvent également être intégrées dans la gestion automatique des paramètres contrôlés par l'ordinateur ou le calculateur.

Un tel dispositif de mesure 1, selon les différents modes de réalisation décrits ci-dessus, permet la mise en oeuvre d'un procédé de mesure de la porosité par ellipsométrie contrôlant et régulant la pression ou la température. Il est ainsi possible d'effectuer les mesures à pression variable et à température constante (adsorption isotherme). Dans ce cas, la pression relative est régulée successivement à diverses valeurs prédéterminées par régulation de la pression à diverses valeurs successives. À titre d'exemple, avec l'utilisation de l'éthanol comme solvant et pour une pression de l'ordre de 0,001 Torr à 1 Torr, la pression relative à 20°C varie, respectivement, de 2,3.10⁻⁵ à 2,3.10⁻², la pression relative à 30°C varie, respectivement, de 1,3.10⁻⁵ à 1,3.10⁻², la pression relative à 40°C varie, respectivement, de 7,5.10⁻⁶ à 7,5.10⁻³, la pression relative à 50°C varie, respectivement, de 4,5.10⁻⁶ à 4,5.10⁻³ et la pression relative à 60°C varie, respectivement, de 2,85.10⁻⁶ à 2,85.10⁻³.

Ainsi, le contrôle et la stabilisation de la température fiabilisent les résultats des cycles isothermes d'adsorption et de désorption. La possibilité de stabiliser à différentes températures, par exemple 20°C, 30°C, 40°C, 50°C, 60°C, permet de détailler plus précisément certaines gammes de pression, notamment les basses pressions. À titre d'exemple, tandis qu'à 20°C la pression relative peut varier de 2,3.10-5 à 2,3.10-2, à 60°C la pression relative peut varier de 2,85.10-6 à 2,85.10-2.

Il est également possible de réaliser des mesures à pression constante et à température variable (adsorption isobare). Dans ce cas, la pression relative est notamment régulée successivement à diverses valeurs prédéterminées en modifiant la valeur de la pression de vapeur saturante Ps, par régulation de la température à diverses valeurs successives. À titre d'exemple, en utilisant l'éthanol comme solvant et pour une température de l'ordre de 20°C, 30°C, 40°C, 50°C, 60°C, la pression de vapeur saturante Ps est, respectivement, de l'ordre 44Torr, 78Torr, 133,7Torr, 220Torr, 350,3Torr. Ainsi, l'augmentation de la température permet d'atteindre et de détailler des pressions relatives basses simplement par augmentation de la pression de vapeur saturante Ps, sans changer la consigne en pression P. À titre d'exemple, pour une pression de l'ordre de 0,001 Torr, la pression relative est de l'ordre de 2,3.10-" (20°C), 1,3.10⁻⁵ (30°C), 7,5.10⁻⁶ (40°C), 4,5.10⁻⁶ (50°C), 2,85.10⁻⁶ (60°C) et, pour une pression de l'ordre de 0,1 Torr, la pression relative est de l'ordre de 2,3.10⁻³ (20°C), 1,3.10⁻³ (30°C), 7,5.10⁻⁴ (40°C), 4,5.10⁻⁴ (50°C), 2,85.10⁻⁴ (60°C).

La gestion dynamique de la pression, à savoir le maintien d'un flux constant de solvant dans l'enceinte, rend ainsi possible le maintien d'une pression stable dans l'enceinte, tout en faisant varier la température à des valeurs choisies. L'augmentation ou la diminution de la température va alors influer sur la désorption ou l'adsorption du solvant. Les modèles théoriques, par exemple Kelvin, Dubinin-Radushkevich, de la physisorption isotherme sont alors adaptés à la physisorption isobare.

Dans tous les cas, le contrôle de la pression, couplé éventuellement à celui de la température, permet notamment l'obtention de courbes isothermes fiables et exploitables sur toute la gamme de pression et à différentes températures. Il est possible d'augmenter le nombre de points de mesure et d'avoir un contrôle plus fin des paliers de pression, afin de réaliser une analyse approfondie des résultats.

La maîtrise du flux continu de solvant, par le contrôle des vannes d'adsorption 5 et de désorption 7, permet également une meilleure précision en pression, notamment dans la gamme des basses pressions, pour pouvoir caractériser la microporosité.

Le dispositif de mesure permet également de limiter l'impact de la pollution et des fuites éventuelles de l'enceinte 2 sur les mesures, par une évacuation permanente des polluants.

Le contrôle informatique éventuel des paramètres de pression et de température apporte également une souplesse d'utilisation et une grande précision (nombre de mesures, gamme de pression, etc.), adaptées aux différentes utilisations possibles. Les mesures et les études des matériaux sont grandement facilitées.

L'invention n'est pas limitée aux différents modes de réalisation décrits ci-dessus. La détermination de la valeur de la pression P consigne peut être directement intégrée au contrôleur de pression 11 (figure 5) ou 11a, 11b (figure 6). D'autres types d'asservissements peuvent être utilisés, en cas d'automatisation du dispositif de mesure 1, tant qu'ils sont précis et efficaces.

Le contrôle de la vanne d'adsorption 5 peut s'effectuer en fonction de la pression, et le contrôle de la vanne de désorption 7 peut s'effectuer en fonction de la position d'un élément de fermeture, destiné à obturer plus ou moins une ou plusieurs micro-fuites de la vanne de désorption 7.

Le capteur de pression 8 peut être remplacé par un montage constitué de deux jauges à membrane, permettant un suivi strict de la pression sur toute la gamme de pression (10⁻⁵ à 100 Torr).

Il est possible de gérer le contrôle des vannes d'adsorption 5 et de désorption 7 au moyen de deux contrôleurs de débit, à savoir un pour l'introduction de solvant et l'autre pour le pompage du solvant.

Il est possible de prévoir une vanne de dérivation supplémentaire, entre le réservoir de solvant 4 et une entrée de l'enceinte 2, afin d'effectuer une introduction contrôlée du solvant à l'intérieur de l'enceinte 2, notamment pour mettre le réservoir de solvant 4 à pression de vapeur saturante.

Dans une autre variante de réalisation non représentée, il est possible de prévoir une chambre intermédiaire d'introduction d'éléments 3, par exemple un sas de transition, destiné à conditionner l'élément 3 avant son introduction dans l'enceinte 2. Une telle chambre de mise à pression permet particulièrement de limiter la pollution carbonée des matériaux poreux, l'enceinte 2 restant sous vide pendant la transition entre deux éléments 3.

## Revendications

1. Procédé de mesure de la porosité d'un élément (3) au moyen d'un dispositif (1) comportant :
- une enceinte de mesure (2), dans laquelle l'élément (3) est disposé,
- un réservoir de solvant (4) associé à une vanne d'adsorption (5), disposée entre le réservoir de solvant (4) et une entrée de l'enceinte (2),
- une pompe (6) associée à une vanne de désorption (7), disposée entre une sortie de l'enceinte (2) et la pompe (6),
- un capteur de pression (8),
- et des moyens de contrôle des vannes d'adsorption (5) et de désorption (7),
le procédé de mesure comportant la mesure de la pression dans l'enceinte (2), au moyen du capteur de pression (8), et un cycle de mesure de la porosité par ellipsométrie, à diverses valeurs prédéterminées de la pression, procédé **caractérisé en ce que**, pendant le cycle de mesure de la porosité par ellipsométrie, lesdits moyens de contrôle (11, 11 a, 11 b) commandent l'ouverture des vannes d'adsorption (5) et de désorption (7), en fonction de la pression mesurée, la pression relative dans l'enceinte (2) étant régulée successivement à diverses valeurs prédéterminées, tout en maintenant un flux continu de solvant dans l'enceinte (2), entre le réservoir (4) et la pompe (6).

2. Procédé selon la revendication 1, **caractérisé en ce qu'**il comporte, avant le cycle de mesure de la porosité par ellipsométrie, le pompage de l'enceinte (2), par l'intermédiaire de la pompe (6), jusqu'à atteindre un vide relatif.

3. Procédé selon la revendication 2, **caractérisé en ce qu'**il comporte, avant l'étape de pompage de l'enceinte (2) pour atteindre le vide relatif, une étape de purge de l'enceinte (2) à l'azote.

4. Procédé selon l'une quelconque des revendications 1 à 3, **caractérisé en ce que** la pression relative est régulée successivement à diverses valeurs prédéterminées par régulation de la pression à diverses valeurs successives, à température constante.

5. Procédé selon la revendication 4, **caractérisé en ce que**, pendant le cycle de mesure de la porosité par ellipsométrie, les moyens de contrôle (11, 11 a, 11 b) commandent l'ouverture des vannes d'adsorption (5) et de désorption (7), de manière à former une succession de paliers de pression successifs de valeurs croissantes.

6. Procédé selon l'une des revendications 4 et 5, **caractérisé en ce que**, pendant le cycle de mesure de la porosité par ellipsométrie, les moyens de contrôle (11, 11 a, 11 b) commandent l'ouverture des vannes d'adsorption (5) et de désorption (7), de manière à former une succession de paliers de pression successifs de valeurs décroissantes.

7. Procédé selon l'une quelconque des revendications 1 à 6, **caractérisé en ce qu'**il comporte, pendant le cycle de mesure de la porosité par ellipsométrie, la mesure (15) et la régulation (16, 17) de la température.

8. Procédé selon l'une quelconque des revendications 1 à 3, **caractérisé en ce que** la pression relative est régulée successivement à diverses valeurs prédéterminées en modifiant la pression de vapeur saturante (Ps), par régulation de la température à diverses valeurs successives, à pression constante.

9. Procédé selon l'une des revendications 7 et 8, **caractérisé en ce que** la température est mesurée sur l'élément (3) à l'intérieur de l'enceinte (2), au moyen d'un thermocouple ou d'une thermorésistance, et régulée par un régulateur de température de type Peltier.

10. Procédé selon l'une des revendications 7 et 8, **caractérisé en ce que** la température est mesurée et régulée au niveau de l'enceinte (2).

11. Procédé selon l'une des revendications 7 et 8, **caractérisé en ce que** la température mesurée et régulée est la température du solvant avant son introduction dans l'enceinte (2).

12. Dispositif pour la mise en oeuvre du procédé de mesure selon l'une quelconque des revendications 1 à 11, ledit dispositif (1) comportant :
- une enceinte de mesure (2), dans laquelle l'élément (3) est disposé,
- un réservoir de solvant (4) associé à une vanne d'adsorption (5), disposée entre le réservoir de solvant (4) et une entrée de l'enceinte (2),
- une pompe (6) associée à une vanne de désorption (7), disposée entre une sortie de l'enceinte (2) et la pompe (6),
- un capteur de pression (8) permettant de mesurer la pression dans l'enceinte,
- et des moyens de contrôle (11, 11 a, 11 b) de l'ouverture des vannes d'adsorption (5) et de désorption (7),
les vannes d'adsorption (5) et de désorption (7) étant contrôlées en pression ou en position, par l'intermédiaire des moyens de contrôle (11, 11 a, 11 b) de l'ouverture des vannes (5, 7).

13. Dispositif selon la revendication 12, **caractérisé en ce qu'**au moins une des vannes (5, 7) comporte au moins une micro-fuite, lesdits moyens de contrôle (11, 11 a, 11 b) de l'ouverture de ladite vanne (5, 7) comportant des moyens de contrôle de la position d'un élément de fermeture desdites micro-fuites.

14. Dispositif selon la revendication 12, **caractérisé en ce qu'**au moins une des vannes (5, 7) comporte un injecteur, lesdits moyens de contrôle (11, 11a, 11 b) de l'ouverture de ladite vanne (5, 7) comportant des moyens de contrôle de la quantité de solvant circulant dans ledit injecteur.

## Claims

1. A method for measuring the porosity of an element (3) by means of a device (1) comprising:
- a measuring chamber (2) in which the element (3) is disposed,
- a solvent tank (4) associated with an adsorption valve (5), arranged between the solvent tank (4) and an inlet of the chamber (2),
- a pump (6) associated with a desorption valve (7), arranged between an outlet of the chamber (2) and the pump (6),
- a pressure sensor (8),
- and control means for controlling the adsorption (5) and desorption (7) valves,
said measuring method comprising measurement of the pressure in the chamber (2) by means of the pressure sensor (8), and a measuring cycle for measuring the porosity by ellipsometry, at different predetermined pressure values,
said method being **characterized in that**, during the cycle for measuring porosity by ellipsometry, said control means (11, 11 a, 11 b) control opening of the adsorption (5) and desorption (7) valves according to the measured pressure, the relative pressure in the chamber (2) being successively regulated to different predetermined values, while maintaining a continuous flow of solvent in the chamber (2) between the tank (4) and the pump (6).

2. The method according to claim 1, **characterized in that** it comprises pumping of the chamber (2) by means of the pump (6) until a relative vacuum is achieved, before the cycle for measuring porosity by ellipsometry.

3. The method according to claim 2, **characterized in that** it comprises a purging step of the chamber (2) with nitrogen, before the pumping step of the chamber (2) to achieve the relative vacuum.

4. The method according to any one of claims 1 to 3, **characterized in that** the relative pressure is successively regulated to different predetermined values by regulating the pressure to different successive values, at constant temperature.

5. The method according to claim 4, **characterized in that**, during the cycle for measuring porosity by ellipsometry, the control means (11, 11 a, 11 b) control opening of the adsorption (5) and desorption (7) valves so as to form a succession of successive pressure plateaus of increasing values.

6. The method according to one of claims 4 and 5, **characterized in that**, during the cycle for measuring porosity by ellipsometry, the control means (11, 11 a, 11 b) control opening of the adsorption (5) and desorption (7) valves so as to form a succession of successive pressure plateaus of decreasing values.

7. The method according to one of claims 1 to 6, **characterized in that** it comprises measurement (15) and regulation (16, 17) of the temperature, during the cycle for measuring porosity by ellipsometry.

8. The method according to any one of claims 1 to 3, **characterized in that** the relative pressure is successively regulated at different predetermined values by modifying the saturated vapor pressure (Ps), by regulating the temperature to different successive values, at constant pressure.

9. The method according to one of claims 7 and 8, **characterized in that** the temperature is measured on the element (3) inside the chamber (2) by means of a thermocouple or a thermoresistor and regulated by a Peltier type temperature controller.

10. The method according to one of claims 7 and 8, **characterized in that** the temperature is measured and regulated at the level of the chamber (2).

11. The method according to one of claims 7 and 8, **characterized in that** the measured and regulated temperature is the temperature of the solvent before the latter is inlet to the chamber (2).

12. A device for implementing the measuring method according to any one of claims 1 to 11, said device (1) comprising :
- a measuring chamber (2) in which the element (3) is disposed,
- a solvent tank (4) associated with an adsorption valve (5), arranged between the solvent tank (4) and an inlet of the chamber (2),
- a pump (6) associated with a desorption valve (7), arranged between an outlet of the chamber (2) and the pump (6),
- a pressure sensor (8) allowing measurement of the pressure inside the chamber,
- and control means for controlling the adsorption (5) and desorption (7) valves, the adsorption (5) and desorption (7) valves being controlled in pressure or in position, by means of the control means (11, 11 a, 11 b) controlling opening of the valves (5, 7).

13. The device according to claim 12, **characterized in that** at least one of the valves (5, 7) comprises at least one micro-leak, said control means (11, 11 a, 11 b) controlling opening of said valves (5, 7) comprising control means of the position of a closing element of said micro-leaks.

14. The device according to claim 12, **characterized in that** at least one of the valves (5, 7) comprises an injector, said control means (11, 11 a, 11 b) controlling opening of said valves (5, 7) comprising control means of the quantity of solvent flowing in said injector.

## Patentansprüche

1. Verfahren zum Messen der Porosität eines Elements (3) mittels einer Vorrichtung (1), die aufweist:
- einen Messraum (2), in welchem das Element (3) angeordnet ist,
- einen Lösungsmitteltank (4), der einem Adsorptionsventil (5) zugeordnet ist, welches zwischen dem Lösungsmitteltank (4) und einem Eingang des Raums (2) angeordnet ist,
- eine Pumpe (6), die einem Desorptionsventil (7) zugeordnet ist, welches zwischen einem Ausgang des Raums (2) und der Pumpe (6) angeordnet ist,
- einen Drucksensor (8),
- und Mittel zur Steuerung des Adsorptionsventils (5) und des Desorptionsventils (7),
wobei das Messverfahren die Messung des Drucks in dem Raum (2) mittels des Drucksensors (8) und einen Messzyklus der Porosität durch Ellipsometrie bei verschiedenen vorbestimmten Werten des Drucks umfasst, wobei das Verfahren **dadurch gekennzeichnet ist, dass** während des Messzyklus der Porosität durch Ellipsometrie die Steuermittel (11, 11a, 11b) die Öffnung des Adsorptionsventils (5) und des Desorptionsventils (7) in Abhängigkeit von dem gemessenen Druck steuern, wobei der relative Druck in dem Raum (2) nacheinander auf verschiedene vorbestimmte Werte reguliert wird, wobei gleichzeitig ein kontinuierlicher Fluss von Lösungsmittel in dem Raum (2) zwischen dem Tank (4) und der Pumpe (6) aufrechterhalten wird.

2. Verfahren nach Anspruch 1, **dadurch gekennzeichnet, dass** es vor dem Messzyklus der Porosität durch Ellipsometrie das Pumpen des Raums (2) über eine Pumpe (6) umfasst, bis ein relatives Vakuum erreicht ist.

3. Verfahren nach Anspruch 2, **dadurch gekennzeichnet, dass** es vor dem Schritt des Pumpens des Raums (2), um das relative Vakuum zu erreichen, einen Schritt der Entlüftung des Raums (2) mit Stickstoff umfasst.

4. Verfahren nach einem der Ansprüche 1 bis 3, **dadurch gekennzeichnet, dass** der relative Druck nacheinander auf verschiedene vorbestimmte Werte reguliert wird, nämlich durch Regulierung des Drucks auf verschiedene aufeinanderfolgende Werte bei konstanter Temperatur.

5. Verfahren nach Anspruch 4, **dadurch gekennzeichnet, dass** während des Messzyklus der Porosität durch Ellipsometrie die Steuermittel (11, 11a, 11b) die Öffnung des Adsorptionsventils (5) und des Desorptionsventils (7) derart steuern, dass eine Folge von aufeinanderfolgenden Druckstufen mit zunehmenden Werten gebildet wird.

6. Verfahren nach einem der Ansprüche 4 und 5, **dadurch gekennzeichnet, dass** während des Messzyklus der Porosität durch Ellipsometrie die Kontrollmittel (11, 11a, 11 b) die Öffnung des Adsorptionsschiebers (5) und des Desorptionsschiebers (7) derart steuern, dass eine Folge von aufeinanderfolgenden Druckstufen mit abnehmenden Werten gebildet wird.

7. Verfahren nach einem der Ansprüche 1 bis 6, **dadurch gekennzeichnet, dass** es während des Messzyklus der Porosität durch Ellipsometrie die Messung (15) und Regulierung (16, 17) der Temperatur umfasst.

8. Verfahren nach einem der Ansprüche 1 bis 3, **dadurch gekennzeichnet, dass** der relative Druck nacheinander auf verschiedene vorbestimmte Werte reguliert wird, indem der Sättigungsdampfdruck (Ps) modifiziert wird, nämlich durch Regulierung der Temperatur auf verschiedene aufeinanderfolgende Werte bei konstantem Druck.

9. Verfahren nach einem der Ansprüche 7 und 8, **dadurch gekennzeichnet, dass** die Temperatur an dem Element (3) im Inneren des Raums (2) mittels eines Thermoelements oder eines Thermowiderstands gemessen und durch einen Wärmeregler vom Typ Peltier reguliert wird.

10. Verfahren nach einem der Ansprüche 7 und 8, **dadurch gekennzeichnet, dass** die Temperatur auf Höhe des Raums (2) gemessen und reguliert wird.

11. Verfahren nach einem der Ansprüche 7 und 8, **dadurch gekennzeichnet, dass** die gemessene und regulierte Temperatur die Temperatur des Lösungsmittels vor seinem Einbringen in den Raum (2) ist.

12. Vorrichtung zur Durchführung des Verfahrens nach einem der Ansprüche 1 bis 11, wobei die Vorrichtung aufweist:
- einen Messraum (2), in welchem das Element (3) angeordnet ist,
- einen Lösungsmitteltank (4), der einem Adsorptionsventil (5) zugeordnet ist, welches zwischen dem Lösungsmitteltank (4) und einem Eingang des Raums (2) angeordnet ist,
- eine Pumpe (6), die einem Desorptionsventil (7) zugeordnet ist, welches zwischen einem Ausgang des Raums (2) und der Pumpe (6) angeordnet ist,
- einen Drucksensor (8), der ermöglicht, den Druck in dem Raum zu messen,
- und Mittel (11, 11a, 11b) zur Steuerung der Öffnung des Adsorptionsventils (5) und des Desorptionsventils (7), wobei das Adsorptionsventil (5) und das Desorptionsventil im Druck oder in der Position über Mittel (11, 11a, 11b) zur Steuerung der Öffnung der Schieber (5, 7) gesteuert werden.

13. Vorrichtung nach Anspruch 12, **dadurch gekennzeichnet, dass** wenigstens eines der Ventile (5, 7) wenigstens ein Mikroleck aufweist, wobei die Mittel (11, 11a, 11b) zur Steuerung der Öffnung des Schiebers (5, 7) Mittel zur Steuerung der Position eines Elements zum Schließen der Mikrolecks aufweisen.

14. Vorrichtung nach Anspruch 12, **dadurch gekennzeichnet, dass** wenigstens eines der Ventile (5, 7) einen Injektor aufweist, wobei die Mittel (11, 11a, 11b) zur Steuerung der Öffnung des Schiebers (5, 7) Mittel zur Steuerung der in dem Injektor zirkulierenden Lösungsmittelmenge aufweisen.
